# EUROPEAN PATENT SPECIFICATION

(11) **EP 4 251 362 B1**
(45) Date of publication and mention of the grant of the patent: **05.08.2026**
(21) Application number: 21823223.9
(22) Date of filing: 26.11.2021
(51) Int. Cl.: B23K 26/00, B23K 26/066, B23K 26/082, B23K 26/352, B23K 26/362, B23K 26/402, C03C 17/00, C03C 23/00, C03C 17/36, B23K 101/18, B23K 103/16, B23K 103/00

(54) **LASER DECOATING APPARATUS COMPRISING A CLOSING MEANS AND ASSOCIATED METHODS AND USE**
LASER ENTSCHICHTUNGSVORRICHTUNG MIT EINER VERSCHLUSSEINRICHTUNG UND ZUGEHÖRIGE VERFAHREN UND VERWENDUNG
APPAREIL LASER D'ENLÈVEMENT DE REVÊTEMENT COMPRENANT UN MOYEN DE FERMETURE ET PROCÉDÉS ET UTILISATION CORRESPONDANTS

(30) Priority: 30.11.2020 EP 20210744
(43) Date of publication of application: 04.10.2023
(73) Proprietor: AGC Glass Europe, 1348 Louvain-La-Neuve (BE); AGC Inc., Tokyo 100-8405 (JP); AGC Flat Glass North America, Inc., Alpharetta, 30022-1167 (US); AGC Vidros do Brasil Ltda., CEP 12523-671 Guaratinguetá, São Paulo (BR)
(72) Inventor: MORGANTE, Eric, 6041 Gosselies (BE)
(74) Representative: AGC Glass Europe
(86) International application number: PCT/EP2021/083224
(87) International publication number: WO 2022/112521

(56) References cited:
- DE-A1- 19 817 629
- US-A1- 2007 138 151
- US-A1- 2014 009 729
- US-A1- 2018 036 839
- US-A1- 2019 001 594

## Description

### Technical Field

The present invention relates to a laser decoating apparatus comprising a closing means to treat a surface of a window mounted in situ, preferably a multi-glazed window.

The present invention also relates to methods to treat a surface of a window and to at least partially decoat a coating system with such laser decoating apparatus comprising the closing means.

The present invention further relates to the use of closing means to reduce the treating surface on a surface of the window.

The window is mounted in situ meaning mounted on a stationary object, for instance a building, or mounted on a mobile object, for instance a vehicle, a train.

Thus, the invention concerns multiple domains where a surface of a window, preferably multi-glazed window, mounted in situ is treated by a laser and preferably where a multi-glazed windows including at least one coating system are used and wherein removing part of said coating system is required to improve the electromagnetic transparency.

### Background Art

Usually, when a window is mounted in situ meaning that the window is mounted on a stationary object, for instance a building, or mounted on a mobile object, for instance a vehicle, a train to close an opening in the stationary or the mobile object, windows are removed from the opening to treat their surfaces.

A treatment can be a laser scribing or like, or preferably a decoating of a coating system.

A standard single-layered window has poor thermal performances. This is why most windows are now built using two or more glass panels separated by a gas and/or polymer-based interlayer. This kind of windows are is called a multi-glazed window.

A coating system is typically applied on the interface of one or several glass panels of a multi-glazed window in order to further improve the multi-glazed window properties.

This coating system can either improve the multi-glazed window insulation, reduce the amount of infrared and/or ultraviolet radiation entering the multi-glazed window and/or keep the sun's heat out of a space wherein such multi-glazed window insulation is used.

However, this type of coating systems is generally metal-based and therefore acts as a Faraday cage, preventing electromagnetic waves such as radio waves, from entering or leaving the space.

In order to improve the transmittance of a multi-glazed window containing a coating system, one can use a laser decoating system to remove at least one portion of the coating system. The total surface to be decoated is typically between 1 and 3% of the total coating system surface, in order to both improve the transmission of radio waves through the multi-glazed-window without impairing the properties of said coating system.

Preferably, to improve the transmission of a radio wave through the window, the decoating system will remove segments from the coating system and the sum of the longest sub-segment of each segment is equal to nλ/2 wherein n is a positive integer greater than zero and lambda (λ) is the wavelength of the radio wave. It is necessary to have a wide band frequency selective surface in order to ensure the transmission of waves of different frequencies through the multi-glazed window, typically between 2GHz and 100Ghz. For instance, the decoating system can be configured to remove a segment of a length greater than 400 mm and a width between 10 and 100 µm.

Preferably, for some applications such as toll communication systems, 4G and/or 5G receptors and transmitters, a small decoating portion is desired instead of a large decoating portion. For instance, a small decoating portion has typically a length less than 400 mm.

A simple approach to solve this problem of RF energy reflection is to remove a portion of the coating system. This approach, however, reduces the solar control benefits offered by the multi-glazed window. Moreover, for multi-glazed window located inside the building, the vehicle or the car, the decoated region would be unacceptably large. On top of that, the transition between the decoated portion and the coating itself is eye-visible and usually non-accepted by users.

Another solution has been to cut lines in the coating system to create a surface which is frequency selective: it has relatively high reflectivity/absorbance for solar energy but relatively low reflectivity/absorbance in the RF region of the electromagnetic spectrum. The cutting may be performed by laser ablation and the spacing of the slits is chosen to provide selectivity at the desired frequency.

To improve the transmittance of said multi-glazed window, WO 2015/050762 (describing the preamble of claim 1) shows an apparatus comprising a laser light source and a lens array configured to focus said laser light source on a coating system of a multi-glazed window. Said apparatus is mounted on suction pads to secure said apparatus on said multi-glazed window. Said apparatus also comprises at least two motors configured to move said laser along rails along the X and Y axis. Said laser is capable of scribing a grid shape on said coating system to improve the electromagnetic transmission of said multi-glazed window.

However, said laser is always focused on a single point and cannot be adapted. In fact, this apparatus is only built to have a focal point in a specific surface and thus such apparatus are built for a single type of double-glazed window being two glass panels separated by a spacer creating a space filled with gas, where the coating system is positioned on the internal interface of the window. Hence, it is not possible to use this apparatus to other types of windows where the glass thickness is different or where the coating system is applied on a different interface.

On top of that, such system needs to move the whole laser device. This movement is complicated, dangerous and implies heavy elements such as motors.

In another domain, US6,559,411 describes an apparatus for laser scribing a tin oxide layer coated on a glass panel substrate.

A predetermined scribing is formed on the tin oxide layer by focusing a laser on said tin oxide layer and by displacing said glass panel substrate by a conveyor along the X or Y axis. Moreover, the position of the laser is adjusted in the Z direction during the laser scribing to maintain the focusing on said tin oxide layer.

However, this focusing requires a precise and complete understanding of the glass panel substrate including the thickness of each layer and the position of said tin oxide layer as well as the knowledge of the exact distance between the conveyor and the laser.

Laser beam of prior art is always placed and fixed orthogonally to the surface to be decoated. To create a decoated surface the decoating apparatus must be displace along said surface using motors and complex drive systems.

Laser beam of the prior art can be reflected on a surface and then can destroy object near the laser device of the prior art.

Moreover, systems described in prior art are heavy to mount on a multi-glazed window due to displacement elements (rails,...) and motors. The precision and the quality are hence not appropriate for small decoating portions due to movements of the apparatus. The decoating time is also long due to displacements of the laser light source especially for small decoating portion where many small displacements are needed within a short distance.

Thus, this apparatus can only be used in factories on glass panel that have just been manufactured. Hence, this apparatus cannot be used on a multi-glazed window of unknown structure, such as the number of glass panels, the number of lamination layers, the numbers of spacers, the number, nature and position of the coating system, ... and that is already mounted on an object, for instance a building or a vehicle.

In addition, a large number of windows are already installed and are known to prevent the transmission of electromagnetic wave. Such windows cannot be replaced or be replaced without important costs . The multi-glazed windows cannot be retrieved from the object, sent back to a factory to remove the part of the coating and then, sent back to be assembled again on the object. Such situations require the decoating process to be carried out in situ, when the multi-glazed window is mounted on the object. In most cases, the structure of these multi-glazed windows and the exact position of their coating system is completely unknown. It is therefore impossible for such apparatus to focus the laser properly on the coating system.

On top of that, when apparatus of the prior art are mounted on a multi-glazed window, the tolerances of manufacture, the variability of mounting system occurs a variability of the distance between the coated surface and the decoating apparatus. Such variability implies that the focal point of the laser beam is not focused on the coated surface. The decoating of such apparatus of the prior art is not efficient, the laser beam being not focused at the right position.

Apparatus of the prior art are designed to be used in factory reflections of rays are not an issue.

Apparatus of the prior art needs to change the laser device and / or change all parameters linked to the laser device to change the working surface to be treated needing experts and / or different laser devices

Hence, the ongoing technical issue is to obtain a decoating apparatus and process that can be used on multiple kind of multi-glazed windows, wherein the position and the thickness of the glass panels and the position of the at least one coating system are not known; and that are able to work when said multi-glazed window is already mounted on an object.

### Summary of invention

The present invention relates, in a first aspect, to a laser decoating apparatus as defined in claim 1, which is inscribed in a parallelepiped rectangle R defined by a longitudinal axis, X, a vertical axis, Y defining a plane P and a lateral axis, Z, and comprising a mounting means to mount the laser apparatus on a window, preferably a multi-glazed window, mounted in situ. The laser apparatus also comprises a laser device generating a laser beam to treat a surface of the window, an orientation means able to orientate the laser beam defining a maximum decoatable surface (WSm) on the surface to be treated.

The solution as defined in the first aspect of the present invention is based on the laser apparatus comprises a closing means to at least partially reduce the maximum decoatable surface to a working surface (WS1, WS2). This permits to reduce the number of components needed to treat a surface, a unique laser device can be used to treat different window configurations and different sizes and different designs for different areas.

The present invention relates, in a second aspect, to a method of treating a surface of a window mounted in situ with a laser apparatus (10) according to the first aspect, see claim 7.

The solution as defined in the second aspect of the present invention is based on the method comprises the following steps:
A. Choosing a working surface (WS1, WS2) of the surface to be treated
B. Selecting a closing means (14) corresponding to the working surface
C. Treating the working surface.

Finally, in a third aspect, the present invention relates to a method of at least partially decoating a coating system of a multi-glazed window mounted in situ with a decoating apparatus according to the first aspect, see claim 8.

Further a fourth aspect of the present invention relates to the use of a closing means in front of a laser beam generated by a laser device of a laser apparatus according to the first aspect to at least partially reduce the maximum decoatable surface to a working surface (WS1, WS2); the laser apparatus is mounted on a window mounted in situ.

It is noted that the invention relates to all possible combinations of features recited in the claims or in the described embodiments.

The following description relates to building applications but it's understood that the invention may be applicable to others fields like automotive or transportation applications.

### Brief description of the drawings

This and other aspects of the present invention will now be described in more detail, with reference to the appended drawings showing various exemplifying embodiments of the invention which are provided by way of illustration and not of limitation. The drawings are a schematic representation and not true to scale. The drawings do not restrict the invention in any way. More advantages will be explained with examples.
FIG. 1 is a sectional view in 3D of a laser apparatus, especially a decoating apparatus according to the present invention.
FIG. 2 is a schematic view of a closing means according to the present invention.
FIG. 3 is a schematic view of a laser apparatus, especially a decoating apparatus according to the present invention mounted on a multi-glazed window with a reduction of the maximum decoatable surface of 0%.
FIG. 4 is a schematic view of a laser apparatus, especially a decoating apparatus according to the present invention with a closing means reducing 0% of the maximum decoatable surface.
FIG. 5 is a schematic view of a laser apparatus, especially a decoating apparatus according to the present invention mounted on a multi-glazed window with a reduction of the maximum decoatable surface to a working surface WS1.
FIG. 6 is a schematic view of a laser apparatus, especially a decoating apparatus according to the present invention with a closing means reducing the maximum decoatable surface to a working surface WS1.
FIG. 7 is a schematic view of a laser apparatus, especially a decoating apparatus according to the present invention mounted on a multi-glazed window with a reduction of the maximum decoatable surface to a working surface WS2.
FIG. 8 is a schematic view of a laser apparatus, especially a decoating apparatus according to the present invention with a closing means reducing the maximum decoatable surface to a working surface WS2.
FIG. 9 is a schematic view of a laser apparatus, especially a decoating apparatus according to the present invention mounted on a multi-glazed window with a reduction of the maximum decoatable surface of 100%.
FIG. 10 is a schematic view of a laser apparatus, especially a decoating apparatus according to the present invention with a closing means reducing the maximum decoatable surface of 100%.
FIG. 11 is a block diagram of the process according to the second aspect of the invention.

### Detailed description

It is an object of the present invention to alleviate the above described problems and to easily adapt the portion and / or the design of the treatment on the surface.

In the following description, unless otherwise specified, expression "substantially" mean to within 10%, preferably to within 5%.

The following description relates to a decoating apparatus but it's understood that the invention may be applicable to any laser apparatus to treat a surface of a window mounted in situ. Preferably the laser apparatus is a decoating apparatus to decoat at least partially a coating system present on a surface of a window.

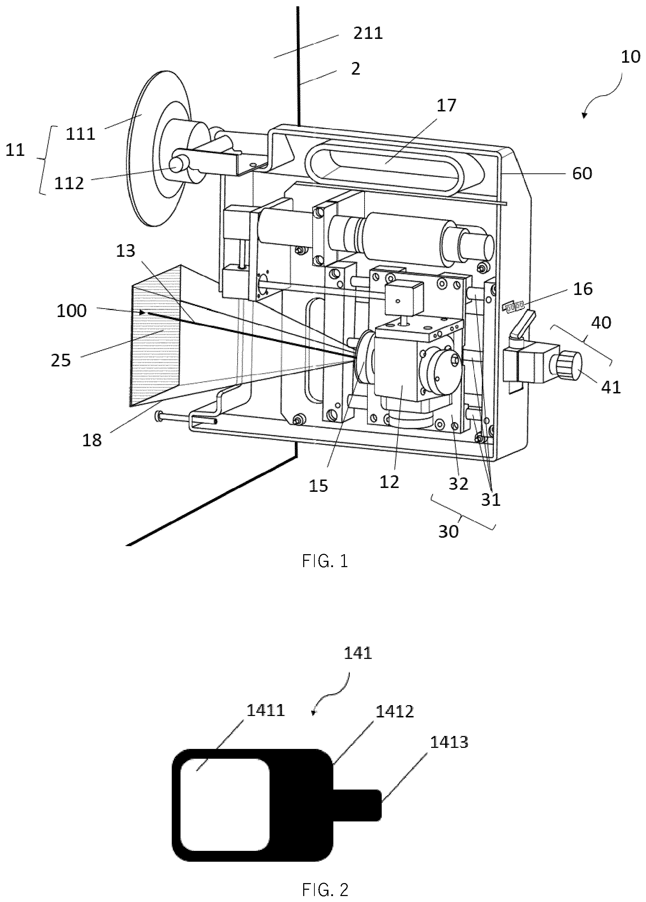

FIG. 1 illustrated a laser apparatus inscribed in a parallelepiped rectangle R defined by a longitudinal axis, X, a vertical axis, Y defining a plane P and a lateral axis, Z, especially a decoating apparatus.

The decoating apparatus 10 is designed to be transportable to treat in situ a surface of a window mounted in situ. The decoating apparatus can comprises an handle 171 to facilitate the handling.

Preferably, the decoating apparatus 10 comprises a housing 101 to protect inside elements such as the laser device, lens,...

Preferably, the housing is made of metallic-based material or polymeric-based material.

In some embodiments, to facilitate the handling and to facilitate the mounting on the multi-glazed window, the decoating apparatus is inscribed in a compact rectangular parallelepiped allowing to decoat even if the surface of the multi-glazed window is bent.

Preferably, the height measured along the Y axis of the decoating apparatus corresponding to the height of the rectangular parallelepiped equals to or is smaller than 500 mm, preferably equals to or is smaller than 450 mm.

Preferably, the length measured along the Z axis of the decoating apparatus corresponding to the length of the rectangular parallelepiped equals to or is smaller than 400 mm, preferably equals to or is smaller than 350 mm

Preferably, the width measured along the X axis of the decoating apparatus corresponding to the width of the rectangular parallelepiped equals to or is smaller than 250 mm, preferably equals to or is smaller than 200 mm.

The weight is preferably less than substantially 20kg and preferably less than substantially 15kg to be easily handled and transported by a single person.

In the embodiment as illustrated in FIG. 1, the decoating apparatus has a weight of substantially 13 kg with a height of substantially 420 mm, a width of substantially 150 mm and a length of substantially 300 mm to be easily handled and transported by a single person.

The housing **101** comprises an aperture **102** to let the laser beam going out of the housing meaning that the aperture is positioned in front of the trajectory of the laser beam.

According to a first aspect of the invention, as illustrated by FIG. 1, a decoating apparatus **10** comprising a mounting means **11** to mount the decoating apparatus on a multi-glazed window **2** mounted in situ meaning that the window is mounted on a stationary object, for instance a building, or mounted on a mobile object, for instance a vehicle, a train.

In some embodiments, the decoating apparatus **10** can be removed from at least a part of the mounting means **11.**

Preferably, the mounting device comprises a suction pad **111** to mount the decoating apparatus on the surface **211** of the multi-glazed window. Preferably, in some embodiments, to facilitate the handling and to be able to manipulate the calibrated element **50,** the mounting means comprises an hooking and unhooking means **112.** In such embodiments, the suction pad can be mounted on the multi-glazed window and in a second step, the decoating apparatus can be hooked on the suction pad **111** with the hooking and unhooking means **112.**

The plane P is preferably substantially parallel to a surface **211, 212, 221, 222** of the multi-glazed window **2**.The decoating apparatus can comprises a stabilization means **121** to stabilize the decoating apparatus on the multi-glazed window while keeping the parallelism between plane P and a surface of the multi-glazed window.

The following description relates to a multi-glazed window but it's understood that the invention may be applicable to single-glazed window meaning a window having a single panel.

The window **2** can be a multi-glazed window used as a window to close an opening of the stationary object or to close an opening of the mobile object.

The multi-glazed window **2** can be at least partially transparent to visible waves for visibility, and natural or artificial light. The multi-glazed window is made of multiple panels separated by at least one interlayer, forming multiple interfaces. The panels therefore can be separated by a space filled with gas and/or by a polymeric interlayer.

In some embodiments, the multi-glazed window **2** can comprise at least two glass panels **21, 22** separated a panel interlayer **23** creating surfaces **211, 212, 221, 222.**

The panel interlayer 23 can be a spacer allowing to create a space **23** filled by a gas like Argon to improve the thermal isolation of the multi-glazed window, creating an insulating multi-glazed window. The invention is not limited to apparatus for use on multi-glazed window having two panels. The apparatus and method of the present invention are suitable for any multi-glazed window such as double, triple glazed windows.

The panel interlayer **23** can be a plastic panel interlayer to laminate the two glass panels together to reduce the noise and/or to ensure the penetration safety. The laminated glazing comprises panels maintained by one or more interlayers positioned between glass panels. The interlayers are typically polyvinyl butyral (PVB) or ethylene-vinyl acetate (EVA) for which the stiffness can be tuned. These interlayers keep the glass panels bonded together even when broken in such a way that they prevent the glass from breaking up into large sharp pieces.

Said panels can be comprises one or more glass sheets. Said glass sheets of can be made of glass, polycarbonate, PVC or any other material used for a window mounted on a stationary object or on a mobile object.

Usually, the material of the panels of multi-glazed window 2 is, for example, soda-lime silica glass, borosilicate glass, aluminosilicate glass or other materials such as thermoplastic polymers or polycarbonates which are especially known for automotive applications. References to glass throughout this application should not be regarded as limiting.

The multi-glazed window 2 can be manufactured by a known manufacturing method such as a float method, a fusion method, a redraw method, a press molding method, or a pulling method. As a manufacturing method of the multi-glazed window, from the viewpoint of productivity and cost, it is preferable to use the float method.

Each panel or glass sheet can be independently processed and/or colored,... and/or have different thickness in order to improve the aesthetic, thermal insulation performances, safety,... The thickness of the multi-glazed window is set according to requirements of applications.

The multi-glazed window 2 can be any known window used in situ. For example, the multi-glazed window 2 can be processed, i.e. annealed, tempered,... to respect the specifications of security and anti-thief requirements. The window can independently be a clear glass or a colored glass, tinted with a specific composition of the glass or by applying an additional coating or a plastic layer for example. The window can have any shape to fit to the opening such as a rectangular shape, in a plan view by using a known cutting method. As a method of cutting the multi-glazed window, for example, a method in which laser light is irradiated on the surface of the multi-glazed window to cut the multi-glazed window, or a method in which a cutter wheel is mechanically cutting can be used. The multi-glazed window can have any shape in order to fit with the application, for example a windshield, a sidelite, a sunroof of an automotive, a lateral glazing of a train, a window of a building,...

The shape of the multi-glazed window in a plan view is usually a rectangle. Depending of the application, the shape is not limited to a rectangle and may be a trapeze, especially for a windshield or a backlite of a vehicle, a triangle, especially for a sidelight of a vehicle, a circle or any other shape able to close an opening made on a stationary object or on a mobile object.

Preferably, the decoating apparatus is mounted on the external surface **211** of the window **2.** The decoating apparatus can be mounted on the frame of the multi-glazed window or on the border of the multi-glazed window instead of mounted on the external surface depending on the application and the situation of the window on the stationary or mobile object.

Preferably, when the laser apparatus is a decoating apparatus, at least one coating system 24 is present on one interface, meaning one surface **211, 212, 221, 222** of the multi-glazed window 2.

Preferably, the coating system is on one of the internal surfaces **212, 221** of the multi-glazed window.

In some embodiments, the multi-glazed window can comprises more than one coating systems. Each coating system is present on a different surface of the multi-glazed window.

This coating system 24 generally uses a metal-based layer and infrared light is highly refracted by this type of layer. Such coating system 24 is typically used to achieve a to a low-energy multi-glazed window.

In some embodiment, the coating system 24 can be a heatable coating applied on the multi-glazed window to add a defrosting and/or a demisting function for example and/or to reduce the accumulation of heat in the interior of a building or vehicle or to keep the heat inside during cold periods for example. Although coating system 24 are thin and mainly transparent to eyes.

Usually, the coating system 24 is covering most of the surface of the interface of the multi-glazed window 2.

The coating system 24 can be made of layers of different materials and at least one of these layers is electrically conductive. In some embodiments, for example in automotive windshields, the coating system 24 can be electrically conductive over the majority of one major surface of the multi-glazed window. This can causes issues such as heated point if the portion **25** to be decoating is not well designed.

A suitable coating system **24** is for example, a conductive film. A suitable conductive film, is for example, a laminated film obtained by sequentially laminating a transparent dielectric, a metal film, and a transparent dielectric, ITO, fluorine-added tin oxide (FTO), or the like. A suitable metal film can be , for example, a film containing as a main component at least one selected from the group consisting of Ag, Au, Cu, and Al.

Such coating systems are low in reflectance for RF radiation meaning that RF radiation are mostly transmitted through the material. In contrast, high in reflectance for RF radiation means that RF radiation are mostly reflected on the surface of the material and/or absorbed by the material and the attenuation is at level of 20 decibels (dB) or more. Low in reflectance means an attenuation at level of 10 decibels (dB) or less. The coating system which is high in reflectance for RF radiation means that the coating system is non-transmitting to RF radiation. Typically, the coating system 24 has an emissivity of not more than 0.4, preferably equals to or less than 0.2, in particular equals to or less than 0.1, equals to or less than 0.05 or even equals to or less than 0.04.

The coating system may comprise a metal based low emissive coating system. Such coating systems typically are a system of thin layers comprising one or more, for example two, three or four, functional layers based on an infrared radiation reflecting material and at least two dielectric coatings, wherein each functional layer is surrounded by dielectric coatings. The coating system of the present invention may in particular have an emissivity of at least 0.010. The functional layers are generally layers of silver with a thickness of some nanometers, mostly about 5 to 20nm. The dielectric layers are generally transparent and made from one or more layers of metal oxides and/or nitrides. These different layers are deposited, for example, by means of vacuum deposition techniques such as magnetic field-assisted cathodic sputtering, more commonly referred to as "magnetron sputtering". In addition to the dielectric layers, each functional layer may be protected by barrier layers or improved by deposition on a wetting layer.

Moreover, if the multi-glazed window presents two coating systems applied on two different interfaces **211, 212, 221, 222,** a first coating needs to be decoated before the second one. For example, the decoating apparatus decoats a portion on the closest coating system and then decoats the second one. The focus point is adapted to be on the correct coating system. Preferably, to avoid to modify the decoating of the closest coating, the decoating apparatus decoats a portion on the farthest coating system and then decoats the closest one. The needed power to decoat the farthest one is higher than the needed power to decoat the closest one and risks to degrade the decoated shape of the portion on the closest one if this one is done before the farthest coating.

Dimensions and shape of the portion to be decoated or the decoated portion depend on the desire application., The apparatus or part of the apparatus can therefore be adapted to the dimension of the portion to be decoated.

The decoated portion can be a full decoated area meaning that the coating system is removed in this entire portion.

Alternatively, to minimize the decoating time while keeping functionalities, such as thermal performances, of the coating system, the decoated portion comprises decoated segments creating zones where the coating system is still present. Decoated segments can have a width between 15 µm and 150 µm, preferably between 30 µm and 70 µm, and more preferably substantially 50 µm, forming specific designs, such as lines, polygons, hashtag-like, a grid or a like.

Decoated designs can depend on wanted visual aspect and / or desired wavelength transparency for example.

The position of the decoated portion on the multi-glazed window depends on the application.

The multi-glazed window can be flat or curved according to requirements by known methods such as hot or cold bending.

The decoating apparatus can decoat small portion of the whole surface of the coating system. As the radius of curvature is usually enough high to allow to focus on a point of the portion to be decoat and keeping the focus on the whole portion.

Because such laser beam can be dangerous for human and objects around the decoating apparatus, instead of and / or in addition to preventing people from approaching or block the space as usually done when a laser is used, in some embodiments, the decoating apparatus **10** can comprise a skirt opaque to the laser beam to block a majority of reflections of the laser beam due to the power of the laser beam used. The skirt is opaque to such laser beam **13.**

The laser apparatus comprises a laser device **200** to treat a surface **211, 212, 221, 222** of the window **2.**

In preferred embodiments, as illustrated in FIG. 1, the laser apparatus is a decoating apparatus to decoat at least partially a portion **25** of a coating system **24** present on a surface of the window 2 and the laser device is designed to decoat at least partially a portion 25) of a coating system 24 present on a surface of the window 2. It means also that a coating system is present on a surface of the window.

The laser device comprises a laser generator **201** to generate a laser beam **13, 202, 202a, 202b, 202c.** It is understood that the laser apparatus can be used in some embodiments to treat, i.e. to engrave, at least a surface of the multi-glazed window.

To very fast remove a portion of a coating system, for instance to improve the electromagnetic transmission of a multi-glazed window, the decoating apparatus comprises an orientation means configured to control the direction of said laser beam. In this way, to decoat a portion is not necessary to use motors to displace the decoating apparatus on the plane P paralleled to the external surface **211** of the multi-glazed-window **2,** the laser beam scans the portion to be decoated thanks to this orientation means. It is not necessarily to displace the decoating apparatus along the plane P for decoating the portion. As the decoating apparatus is fastened to the apparatus, no motor are needed to displace the decoating apparatus along plane P. This conducts to a reduction of the weight of the apparatus. Moreover, as only the laser beam is oriented, the scan of the laser beam on the portion is faster than a displacement on the same portion of the decoating apparatus using motors. Thus, the orientation means is able to rapidly decoat a limited coated portion of a coating system. Thus, the apparatus of the invention can be used to improve the electromagnetic properties of a multi-glazed window already mounted on a stationary object, for instance building, or on a mobile object, for instance a vehicle, a train. Such orientation means allows to decoat a portion of a coating system without moving the decoating apparatus 10 or at least moving the laser device **12** in parallel of the external surface **211** of a multi-glazed window **2** using motors as apparatus of the prior art meaning that the decoating apparatus is lighter and more easily transportable. According to the invention, the decoating apparatus can further comprise an orientation means configured to control the direction of said laser beam, preferably the orientation means comprises at least a rotatable mirror or a mirrors using a galvanometer based motor a galvo head. More preferably, the orientation means comprises a galvo head **12** configured to control the direction, through the focal lens, of said laser beam. The orientation means head comprises more than one mirror to able the laser beam to fast scan the surface to be decoated.

Said mirrors can rotate to orientate the laser beam. Rotation of said mirrors can be done by actuators, mechanical elements or any other elements able to orientate mirrors.

With such orientation means, the orientation of the laser beam **13** represents a pyramidal 3D shape **16.** On the coating system **24,** the pyramidal 3D shape corresponds to a decoating area **25** represented by the maximum decoatable surface WSm, and by a reduced decoatable surface **WS1, WS2** on the coated surface **24.**

Dimensions of such decoating area **25** is preferably from 5 cm to 25 cm and more preferably from 10 cm to 15 cm.

Because laser beam can be dangerous for human, instead of preventing people from approaching or block the space, the decoating apparatus **10** can comprises a opaque to such laser beam **13** skirt between the external surface and the decoating apparatus at least around the mouth in which the laser beam comes out.

The decoating apparatus **10** further comprises a closing means **14** to at least partially reduce the maximum decoatable surface **WSm** to a working surface **WS1, WS2** on the coating system **24.**

According to the invention, in some embodiments, the closing means **14** can comprise a fixing means and a mask **141** able to be fixed to the fixing means in front of the laser beam.

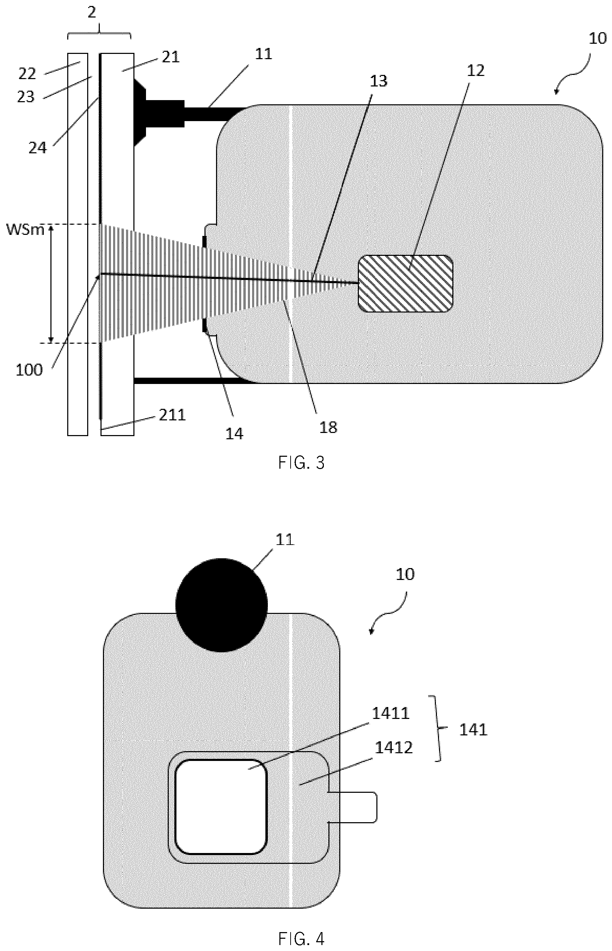

According to the invention and as illustrated in FIG.3, the mask **141** can comprise at least a mask window **1411** and a mask frame **1412** to reduce the size of the decoatable area **25,** from a maximum decoating surface **WSm** to zero or to a reduced area **WS1, WS2.** In such embodiments, the mask frame **1412** is opaque to the laser beam, meaning that the laser beam is not transmitted through the mask frame; the laser beam is absorbed and/or reflected by the mask frame. In such embodiments, the mask window **1411** defines, by projection and the Thales' theorem, the decoatable surface on the coating system.

In some embodiments, the fixing means can comprise a slide able to slide the mask in front of the laser beam. The slide can be coupled with or replaced by a slit on the housing of the decoating apparatus.

Thus, the closing means can block parts of the scan of the laser beam. The decoating area **25** on the coating system **24** is reduced from a maximum area **WSm** to a reduced area **WS1, WS2** or to zero in some embodiments in which the closing means is fully opaque to the laser beam. These embodiments is useful during some handling to avoid to activate the laser accidentally with the risk linked to such laser beam.

In some embodiments, the mask **141** can be removable and preferably the closing means can comprise a handle **1413** to facilitate the handling of the closing means.

In preferred embodiment, the material of the mask frame is a metal-based material. In other embodiments the mask frame can be made of any material able to block the transmission of the laser beam.

Preferably, the mask window can have any shape designed to correspond to the area to be treat on the surface.

In preferred embodiments, the mask window is has polygonal shape and preferably a rectangular shape.

In some preferred embodiments, the mask window as a perimeter equals to or smaller than 500 mm.

As illustrated in FIG. 1, the mask window can have a general rectangular shape, preferably a square, with or without rounded angles. The length of the side equals or is at most 120 mm.

In some preferred embodiments, the laser device comprises a fixed part **200f** and a movable part **200m** to reduce the number of element to move to focus the laser beam on the surface to treat. In such embodiment, the movable part comprises the orientation means **12** and the focal lens **15.**

In some embodiments, the movable part **200m** of the decoating apparatus **10** comprises a first deflecting mirror **205** to deflect the laser beam **202** substantially in the perpendicular direction **202c** to the galvo head. The laser beam **202** is generated by the laser generator **201.** The laser beam is deflected by the first deflecting mirror **205** to enter into the galvo head substantially perpendicular to the Z axis. The galvo head orientates the laser beam **202c** to scan the portion **25** to be at least partially decoated with the oriented laser beam **13.**

The laser device comprises a movable part **200m.** The movable part is able to be displaced inside the decoating apparatus. The movable part comprises a focal lens **15** to produce a focal point **100** of the laser beam **13** at a defined distance **Df** from the focal lens.

To be able to displace the movable part, the decoating apparatus further comprises a movable means **30** able to move the movable part substantially along the lateral axis Z meaning that the movable part can be displaced to move away or closer to the multi-glazed window along parallel to the Z axis to place the focal point at a specific distance and preferably on the portion **25** of a coating system **24.**

Preferably, the movable part is irremovable along the longitudinal axis X and along the vertical axis Y to be able to move only substantially along parallel to the Z axis.

In some preferred embodiment, the laser device comprises a fixed part **200f,** irremovable in the decoating apparatus in directions paralleled to plane P and along the lateral axis Z meaning that the fixed part cannot move inside the decoating apparatus.

Preferably, the fixed part of the laser device comprises a laser generator **201** to generate a laser beam **202** to minimize movable components of the laser device while reducing the weight of the laser device.

Preferably, the fixed part of the laser device can be screwed or firmly fixed by any other known manner on the housing.

Preferably, the laser generator generates a collimated laser beam to minimize the size and the components of the laser device.

In a preferred embodiment, to minimize dimensions of the decoating apparatus to be more compact, as illustrated in FIG.3, the fixed part **200f** of the laser device further comprises a second **204** and a third **203** deflecting mirrors to deflect the laser beam substantially in the perpendicular direction.

In such embodiment, the laser generator **201** generates a laser beam **202** substantially parallel to the Z axis. The laser beam **202** is deflected by the third **203** and the second **204** deflecting mirrors to be redirected in a substantially paralleled and opposite direction **202b** from the generated direction. The redirected laser beam **202b** enters into the movable part **200m** of the laser device **200.** Then the first deflecting mirror **205** deflects the laser beam **202b** to enter into the galvo head **12.**

In some embodiments, the second and the third deflecting mirrors are comprised in the fixed part. The movable means by moving away or closer to the multi-glazed window along parallel to the Z axis the movable part of the laser device, the length of the redirected laser beam **202b** is respectively increased or reduced. Lengths of the part of the laser beam **202, 202a, 202c** keep their respective length even if the movable part is moving.

In other embodiments, the second and the third deflecting mirrors are comprised in the movable part. In such embodiments, only the length of the generated laser beam **202** can be increased or reduced by moving the movable part.

The movable part **200m** can move with the movable means **30, 40, 41, 42.**

In some embodiments, easily and precisely move the movable part without opening the decoating apparatus **10** and / or without touching directly the laser device **12,** the movable means comprises an internal part **30** and an external part **40.**

Preferably, the internal part **30** comprises a plate **32** or like on which the movable part is placed and a slide **31** to ensure the direction of the movement of the movable part while keeping the correct trajectory of the laser beam **13.** As shown in FIG. 1, the slide can be in form of bars **31** on which the plate **32** can slide. Thus, the movable part can move only along bars and substantially along the Z axis.

Preferably, in relation with the internal part and the external part, the movable means can comprises a movable element **42.**

In some embodiments, easily and precisely move the movable part **200m** without opening the decoating apparatus **10** and/or without touching directly the laser device **12,** the movable means **40** comprises a movable element **42** and a crank **41** linked to the movable element. The crank is preferably placed outside of the interior of the decoating apparatus **10** to fast interact with the position of the laser device.

In some embodiments, the movable element comprises a screw **42** between the crank **41** and the slide **30** to precisely move the movable part of the laser device.

Preferably, the external part **40** can comprises a crank **41** linked to the movable element. The crank is placed outside of the interior of the decoating apparatus **10** to fast interact with the position of the laser device without opening the housing and / or manipulating directly the movable part of the laser device.

In some embodiments, the movable means can comprises a motor to move the movable part. In such embodiments, the motor is placed inside the decoating apparatus and a interaction means is placed outside the decoating apparatus to activate the motor such as press buttons,...

Preferably, the screw **42** has a defined thread. By turning the screw, the mobile part moves of a defined distance corresponding to the length of the defined thread. In some embodiments, a measurement display can converts the number of rotation made by the screw to display the distance in mm. Once the difference between the distance Df and the distance between the coating system and the focal lens is calculated or at least estimated, This difference correspond to the displacement to be made, from or away of the multi-glazed window depending of the configuration, by the mobile part. The value shown by a measurement display indicates a reference value. The measurement display can show the displacement to arrive to said difference.

The decoating apparatus can comprise a measurement display **16** able to display the movement of the laser device or the movable part of the laser device in some embodiments induced by the movable means.

The measurement display can be linked to the direct movement of the laser device or linked to a part of the movable means such as the rotation of the crank, the rotation of the screw or the movement on the slide if such elements exist.

Preferably, the measurement display displays movement in millimeters to be able to know the exact position of the focal point.

The precision of the move is preferably under the 0.1 mm. The movement is preferably indicated in 0.1 mm. From the position Pc indicated, or reset, on the measurement display, the distance Dc is converter in 1/10 mm to move in the correct unit, i.e. Dc equals to 30 mm the measurement display needs to indicate a movement of 300.

In some embodiments, the measurement display can be analogic or digital.

In some embodiments, a reset function can be added to reset the value of the movement of the laser device, for example the index value.

FIGs. 3 to 10 illustrates a decoating apparatus **10** mounted on the external surface **211** of a multi-glazed window **2** via a mounting means. The laser device **12** generates a laser beam **13** and an orientation means orientates the laser beam to let the laser beam scan the maximum decoatable surface **WSm.**

In embodiments as illustrated in FIGs. 3 and 4, the closing means is not reducing the decoatable area **25** meaning that the aperture in front of the laser beam is fully opened as illustrated in FIG. 3. The mask window corresponds to the maximum decoatable surface **WSm** on the surface to treat especially on the coating system **24.**

In this embodiment, the closing means is not reducing the decoatable area **25** meaning that the aperture in front of the laser beam is fully opened as illustrated in FIG.3.

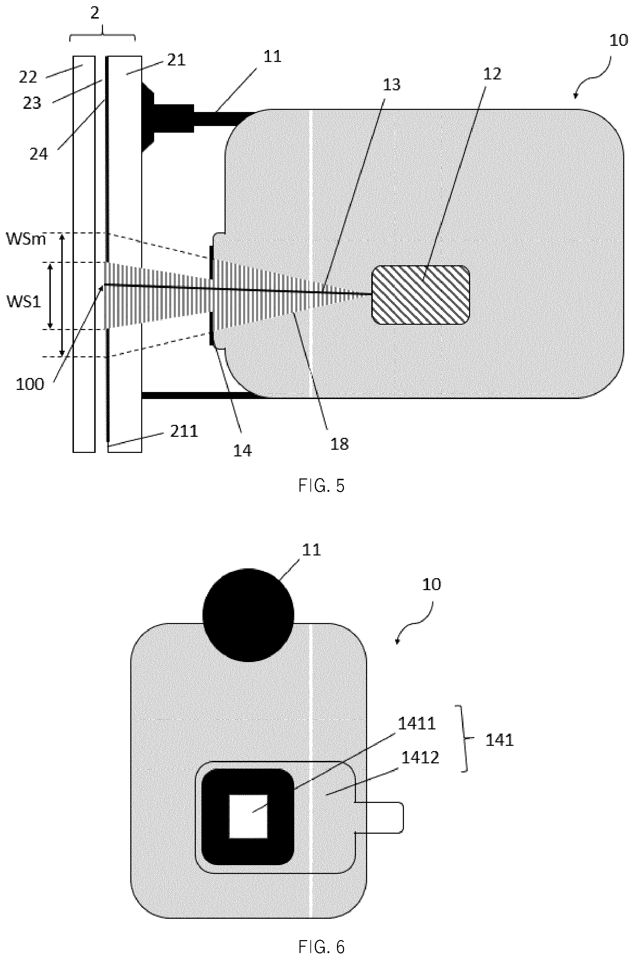

In some embodiments as illustrated in FIGs. 5 and 6, the closing means reduces the decoatable area **25** to a working decoatable surface **WS1** on the surface to treat especially on the coating system **24** meaning that the aperture in front of the laser beam is partially closed as illustrated in FIG. 6. The mask window **1411** of the mask **141** comprises a mask window smaller than the mask window of the embodiments illustrated in FIGs. 3 and 4. The mask window of this embodiment corresponds to a first working decoatable surface **WS1** on the surface to treat, especially in FIG. 5 the coating system **24** present on the internal surface **212.** The mask window can be placed in any place in front of the laser beam and not necessarily in a central position.

The volume **18** generated by the orientation means and the laser beam is the same, only the closing means is different to change the working decoatable area **25.**

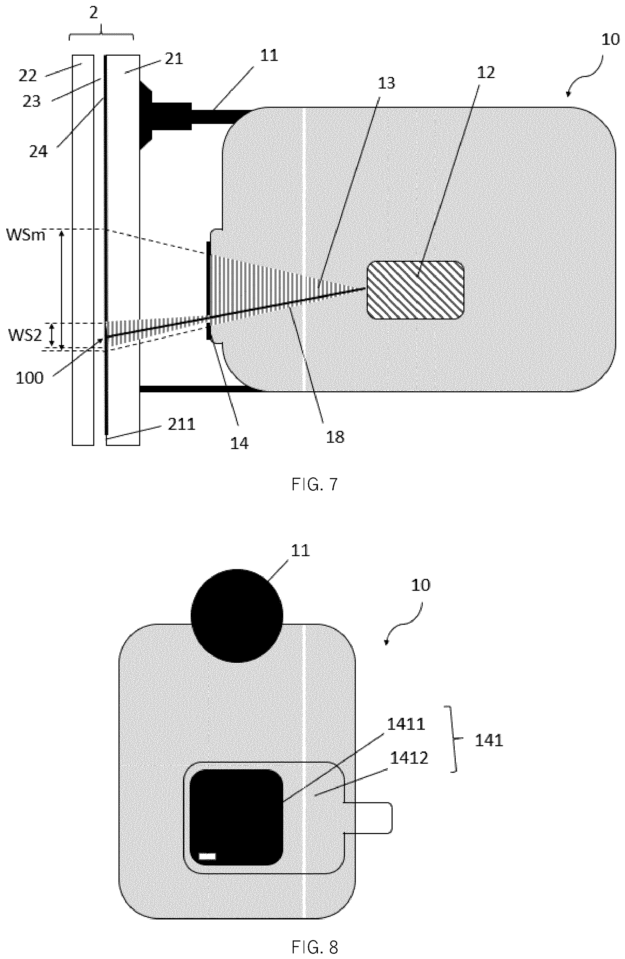

In some embodiments as illustrated in FIGs. 7 and 8, the closing means reduces the decoatable area **25** to a working decoatable surface **WS2** on the surface to treat especially on the coating system **24** meaning that the aperture in front of the laser beam is partially closed as illustrated in FIG. 8. The mask window **1411** of the mask **141** comprises a window smaller than the mask window of the embodiments illustrated in FIGs. 3 and 4 or in FIGs. 5 and 6. The mask window of this embodiment corresponds to a second working decoatable surface **WS2** on the coating system **24** smaller than the first working decoating surface **WS1.** The window can be placed in any place in front of the laser beam and not necessarily in a central position.

The volume **18** generated by the orientation means and the laser beam is the same, only the closing means is different to change the working decoatable area **25.**

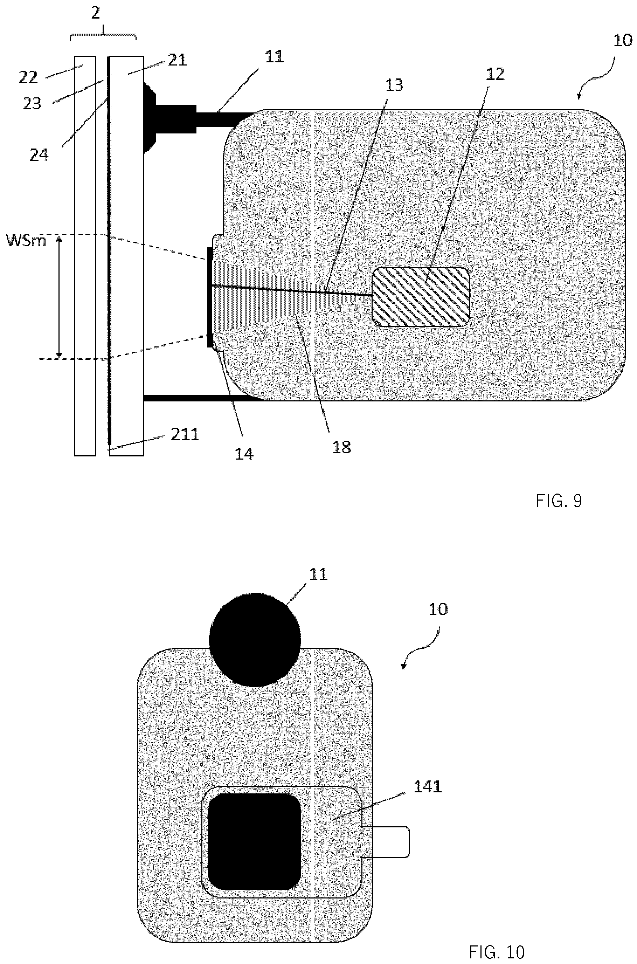

In some embodiments as illustrated in FIGs. 9 and 10, the closing means reduces the decoatable area **25** to 0 meaning that the aperture in front of the laser beam is closed as illustrated in FIG. 10. The mask window **1411** of the mask **141** is reduced to zero meaning that the closing means is fully opaque to laser beam. These embodiments is particularly useful to protect the user when the laser is not in the normal conditions to decoat, for example during a maintenance, during the transport, during the handling and/or during the mounting step.

The volume **18** generated by the orientation means and the laser beam is the same, only the closing means is different to reduce the working decoatable area **25** to zero allowing to protect any user during handling even if the decoating apparatus is working generating a laser beam

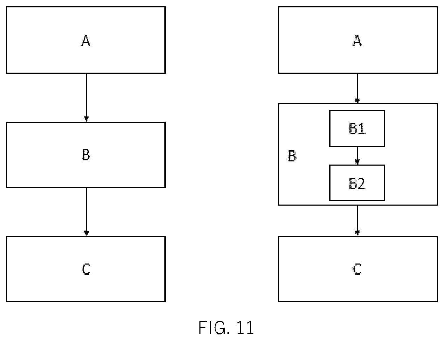

Figure 11 is a block diagram presenting the main steps of the method according to a second aspect of the invention. The method is a method at least partially decoating a coating system **24** of a multi-glazed window **2** mounted in situ with a decoating apparatus **10** according to the first aspect of the invention, mounted on the multi-glazed window.

The method comprises a first step **A** of choosing a working surface **WSm, WS1, WS2** of the coating system to be decoated in front of the decoating apparatus.

The choice depends of the application and/or the configuration of the multi-glazed window within its environment.

The method comprises a second step **B** of selecting a closing means **14** corresponding to the working surface chosen in step **A.**

In some embodiments, this second step **B** can comprise a first sub-step **B1** of selecting a mask **141** corresponding to the working surface and a second sub-step **B2** of fixing the mask **141** to the fixing means **142.**

The method comprises a third step **C** of decoating at least partially the working surface.

The method can comprises a step **D** after the step **C** of placing a fully opaque closing means instead of the used closing means in order to unmount and transport the decoating apparatus safely.

Preferably, the method further comprises before the step A, a step of mounting the laser apparatus on the external surface **211** of the window **2** with the mounting means **11.**

Preferably, the method further comprises after steps C or step D in some embodiments a step of unmounting the laser apparatus.

An embodiment provides the use of a closing means in front of a laser beam generated by a laser device of a laser apparatus 10 according to first aspect to at least partially reduce the maximum decoatable surface to a working surface WS1, WS2; the laser apparatus is mounted on a window 2 mounted in situ.

The first, the second, the third aspect, and the fourth aspect of the present invention allow to keep same parameters for the laser device while changing only the dimensions of the decoatable working surface on a surface to treat of a window mounted in situ, especially a coating system. Any user can treat, especially decoat without any specific skills in laser device parameters only by changing the closing means with the one corresponding to the dimensions and designed needs for the treatment, especially for decoating at least partially a portion of a coating system present on a surface of a window mounted in situ.

## Claims

1. Laser decoating apparatus (10), inscribed in a parallelepiped rectangle R
defined by a longitudinal axis, X, a vertical axis, Y defining a plane P and a lateral axis, Z, comprising :
- a mounting means (11) to mount the laser apparatus on a window (2), preferably a multi-glazed window, mounted in situ;
- a laser device (200) generating a laser beam (13) to treat a surface (211, 212, 221, 222) of the window;
- an orientation means (12) able to orientate the laser beam defining a maximum decoatable surface (WSm) on the surface to be treated;
**characterized in that** the laser apparatus comprises a closing means (14) to at least partially reduce the maximum decoatable surface to a working surface (WS1, WS"), so that the laser device decoats at least partially a portion (25) of a coating system (24) present on a surface of the window (2).

2. Laser decoating apparatus according to claim 1, wherein the closing means comprises a fixing means and a mask (141) able to be fixed to the fixing means in front of the laser beam.

3. Laser decoating apparatus according to claim 2, wherein the mask comprises at least a mask window (1411) and a mask frame (1412) and wherein the mask frame is opaque to the laser beam.

4. Laser decoating apparatus according to claim 1 or 2, wherein the fixing means comprises a slide able to slide the mask in front of the laser beam.

5. Laser decoating apparatus according to any preceding claims, where the laser device comprises a movable part (200m) and a fixed part (200f), irremovable in the decoating apparatus in directions paralleled to plane P and along the lateral axis Z.

6. Laser decoating apparatus according to claim 5, wherein the mobile part is irremovable along the longitudinal axis X and along the vertical axis Y.

7. Method of treating a surface of a window (2) mounted in situ with a laser decoating apparatus (10) according to claims 1 to 6 wherein the method comprises the following steps:
A. Choosing a working surface (WS1, WS2) of the surface to be treated
B. Selecting a closing means (14) corresponding to the working surface
C. Treating the working surface.

8. Method of at least partially decoating a coating system (24) of a multi-glazed window (2) mounted in situ with the laser decoating apparatus (10) according to claims 1 to 6 mounted on the multi-glazed window; **characterized in that** the method comprises the following steps:
A. Choosing a working surface (WS1, WS2) of the coating system to be decoated
B. Selecting a closing means (14) corresponding to the working surface
C. Decoating at least partially the working surface.

9. Method according to claim 7 or 8, wherein the decoating apparatus is according to claims 2 to 3, and wherein the step B comprises a first sub-step B1 of selecting a mask corresponding to the working surface and a second sub-step B2 of fixing the mask to the fixing means.

10. Use of a closing means in front of a laser beam generated by a laser device of a laser decoating apparatus (10) according to claim 1 to 6 to at least partially reduce the maximum decoatable surface to a working surface (WS1, WS2); the laser apparatus is mounted on a window (2) mounted in situ.

## Patentansprüche

1. Laser-Entschichtungseinrichtung (10), die in ein Parallelepiped-Rechteck R eingeschrieben ist, das durch eine Längsachse, X, eine vertikale Achse, Y, die eine Ebene P definiert, und eine laterale Achse, Z, definiert ist, umfassend
- ein Montagemittel (11) zum Montieren der Laser-Einrichtung auf einem Fenster (2), vorzugsweise einem mehrfachverglasten Fenster, das in situ montiert ist;
- eine Laser-Vorrichtung (200), die einen Laserstrahl (13) generiert, um eine Oberfläche (211, 212, 221, 222) des Fensters zu behandeln;
- ein Orientierungsmittel (12), das in der Lage ist, den Laserstrahl zu orientieren, der eine maximal entschichtbare Oberfläche (WSm) auf der zu behandelnden Oberfläche definiert;
**dadurch gekennzeichnet, dass** die Laser-Einrichtung ein Verschlussmittel (14) umfasst, um die maximal entschichtbare Oberfläche zumindest teilweise auf eine Arbeitsoberfläche (WS1, WS") zu reduzieren, so dass die Laser-Vorrichtung zumindest teilweise einen Anteil (25) eines Beschichtungssystems (24), das auf einer Oberfläche des Fensters (2) vorhanden ist, entschichtet.

2. Laser-Entschichtungseinrichtung nach Anspruch 1, wobei das Verschlussmittel ein Fixiermittel und eine Maske (141) umfasst, die vor dem Laserstrahl an dem Fixiermittel fixierbar ist.

3. Laser-Entschichtungseinrichtung nach Anspruch 2, wobei die Maske mindestens ein Maskenfenster (1411) und einen Maskenrahmen (1412) umfasst, und wobei der Maskenrahmen für den Laserstrahl opak ist.

4. Laser-Entschichtungseinrichtung nach Anspruch 1 oder 2, wobei das Fixiermittel einen Schlitten umfasst, der die Maske vor den Laserstrahl schieben kann.

5. Laser-Entschichtungseinrichtung nach einem der vorhergehenden Ansprüche, wobei die Laser-Vorrichtung ein bewegliches Teil (200m) und ein fixiertes Teil (200f) umfasst, das in der Entschichtungseinrichtung in Richtungen parallel zur Ebene P und entlang der lateralen Achse Z unentfernbar ist.

6. Laser-Entschichtungseinrichtung nach Anspruch 5, wobei das mobile Teil entlang der Längsachse X und entlang der vertikalen Achse Y unentfernbar ist.

7. Verfahren zum Behandeln einer Oberfläche eines in situ montierten Fensters (2) mit einer Laser-Entschichtungseinrichtung (10) nach den Ansprüchen 1 bis 6, wobei das Verfahren die folgenden Schritte umfasst:
A. Auswählen einer Arbeitsoberfläche (WS1, WS2) der zu behandelnden Oberfläche
B. Auswählen eines Verschlussmittels (14), das der Arbeitsoberfläche entspricht
C. Behandeln der Arbeitsoberfläche.

8. Verfahren zum zumindest teilweisen Entschichten eines Beschichtungssystems (24) eines in situ montierten mehrfachverglasten Fensters (2) mit der Laser-Entschichtungseinrichtung (10) nach den Ansprüchen 1 bis 6, die auf dem mehrfachverglasten Fenster montiert wird; **dadurch gekennzeichnet, dass** das Verfahren die folgenden Schritte umfasst:
A. Auswählen einer Arbeitsoberfläche (WS1, WS2) des zu entschichtenden Beschichtungssystems
B. Auswählen eines Verschlussmittels (14), das der Arbeitsoberfläche entspricht
C. mindestens teilweises Entschichten der Arbeitsoberfläche.

9. Verfahren nach Anspruch 7 oder 8, wobei die Entschichtungseinrichtung gemäß den Ansprüchen 2 bis 3 ist, und wobei der Schritt B einen ersten Teilschritt B1 des Auswählens einer Maske, die der Arbeitsoberfläche entspricht, und einen zweiten Teilschritt B2 des Fixierens der Maske an dem Fixiermittel umfasst.

10. Verwendung eines Verschlussmittels vor einem Laserstrahl, der durch eine Laser-Vorrichtung einer Laser-Entschichtungseinrichtung (10) nach Anspruch 1 bis 6 generiert wird, um die maximal entschichtbare Oberfläche zumindest teilweise zu einer Arbeitsoberfläche (WS1, WS2) zu reduzieren;
wobei die Laser-Einrichtung auf einem in situ montierten Fenster (2) montiert wird.

## Revendications

1. Appareil de décapage laser (10), inscrit dans un rectangle parallélépipédique R défini par un axe longitudinal, X, un axe vertical, Y définissant un plan P et un axe latéral, Z, comprenant :
- un moyen de montage (11) pour monter l'appareil laser sur une fenêtre (2), de préférence une fenêtre à vitrages multiples, montée in situ ;
- un dispositif laser (200) générant un faisceau laser (13) pour traiter une surface (211, 212, 221, 222) de la fenêtre ;
- un moyen d'orientation (12) apte à orienter le faisceau laser définissant une surface maximale pouvant être décapée (WSm) sur la surface à traiter ;
**caractérisé en ce que** l'appareil laser comprend un moyen de fermeture (14) pour réduire au moins partiellement la surface pouvant être décapée maximale à une surface de travail (WS1, WS"), de sorte que le dispositif laser décape au moins partiellement une portion (25) d'un système de revêtement (24) présent sur une surface de la fenêtre (2).

2. Appareil de décapage laser selon la revendication 1, dans lequel le moyen de fermeture comprend un moyen de fixation et un masque (141) apte à être fixé au moyen de fixation devant le faisceau laser.

3. Appareil de décapage laser selon la revendication 2, dans lequel le masque comprend au moins une fenêtre de masque (1411) et un cadre de masque (1412) et dans lequel le cadre de masque est opaque au faisceau laser.

4. Appareil de décapage laser selon la revendication 1 ou la revendication 2, dans lequel le moyen de fixation comprend une glissière apte à faire glisser le masque devant le faisceau laser.

5. Appareil de décapage laser selon l'une quelconque des revendications précédentes, où le dispositif laser comprend une partie amovible (200m) et une partie fixe (200f), inamovibles dans l'appareil de décapage dans des directions parallèles au plan P et le long de l'axe latéral Z.

6. Appareil de décapage laser selon la revendication 5, dans lequel la partie mobile est inamovible le long de l'axe longitudinal X et le long de l'axe vertical Y.

7. Procédé pour traiter une surface d'une fenêtre (2) montée in situ avec un appareil de décapage laser (10) selon les revendications 1 à 6 dans lequel le procédé comprend les étapes suivantes :
A. choisir une surface de travail (WS1, WS2) de la surface à traiter
B. sélectionner un moyen de fermeture (14) correspondant à la surface de travail
C. traiter la surface de travail.

8. Procédé pour décaper au moins partiellement un système de revêtement (24) d'une fenêtre (2) à vitrages multiples montée in situ avec l'appareil de décapage laser (10) selon les revendications 1 à 6 monté sur la fenêtre à vitrages multiples ;
**caractérisé en ce que** le procédé comprend les étapes suivantes :
A. choisir une surface de travail (WS1, WS2) du système de revêtement à décaper
B. sélectionner un moyen de fermeture (14) correspondant à la surface de travail
C. décaper au moins partiellement la surface de travail.

9. Procédé selon la revendication 7 ou la revendication 8, dans lequel l'appareil de décapage est selon les revendications 2 à 3, et dans lequel l'étape B comprend une première sous-étape B1 de sélection d'un masque correspondant à la surface de travail et une deuxième sous-étape B2 de fixation du masque au moyen de fixation.

10. Utilisation d'un moyen de fermeture devant un faisceau laser généré par un dispositif laser d'un appareil de décapage laser (10) selon la revendication 1 à 6 pour réduire au moins partiellement la surface maximale pouvant être décapée à une surface de travail (WS1, WS2) ;
l'appareil laser est monté sur une fenêtre (2) montée in situ.
